# FASCICULE DE BREVET EUROPEEN

(11) **EP 3 658 417 B1**
(45) Date de publication et mention de la délivrance du brevet: **12.11.2025**
(21) Numéro de dépôt: 18737953.2
(22) Date de dépôt: 18.06.2018
(51) Int. Cl.: B60R 13/08

(54) **CLIP DE PRE MAINTIEN AVEC JEU FONCTIONNEL**
VORHALTECLIP MIT FUNKTIONSSPIEL
PRE-RETAINING CLIP WITH FUNCTIONAL CLEARANCE

(30) Priorité: 28.07.2017 FR 1757175
(43) Date de publication de la demande: 03.06.2020
(73) Titulaire: Stellantis Auto SAS, 78300 Poissy (FR)
(72) Inventeur: BOUDAN, Julien, 91210 Draveil (FR); GOUHINEC, Jean Paul, 78000 Versailles (FR)
(74) Mandataire: BCIP
(86) Numéro de dépôt international: PCT/FR2018/051453
(87) Numéro de publication internationale: WO 2019/020880

(56) Documents cités:
- FR-A1- 3 038 290
- JP-A- 2005 178 565
- JP-A- 2009 073 425
- JP-A- 2015 101 224

## Description

L'invention a trait au montage des carénages disposés sous la structure avant d'un véhicule automobile, plus particulièrement elle concerne le système de montage d'un écran sous moteur et d'un déflecteur inférieur de pare-chocs avant.

Un véhicule automobile comprend une caisse ayant une structure avant qui est délimitée par un pare-chocs, et qui définit un compartiment moteur. Au sein de ce compartiment est logé un groupe motopropulseur. Aussi, un système de refroidissement est monté sur la façade avant du véhicule.

Il est notamment courant de placer sous cette façade avant des carénages dont la fonction est principalement d'habiller, protéger et améliorer la performance aérodynamique du véhicule. Généralement, les carénages mis en place consistent en un déflecteur inférieur de pare-chocs avant et un écran sous moteur. Ces deux pièces sont essentiellement des plaques, notamment en matière thermoformable, présentant de grandes dimensions.

Les déflecteurs inférieurs de pare-chocs avant sont plus particulièrement situés sous le bouclier avant, également couramment appelé peau de pare-chocs. Leur fonction est en fait d'optimiser la circulation d'air lorsque le véhicule est en mouvement, et donc de diminuer la trainée, au bénéfice de la consommation et des émissions polluantes du véhicule.

Les écrans sous moteur, du fait de leur localisation essentiellement sous le groupe motopropulseur, permettent quant à eux d'isoler le compartiment moteur du bruit de la route, tout en ayant une fonction aérodynamique en améliorant l'écoulement de l'air.

Concernant le montage sous la façade avant de l'écran sous moteur et du déflecteur inférieur de pare-chocs avant, cette opération se fait généralement manuellement et en principe en deux temps.

La première étape consiste ainsi en la mise en place du déflecteur inférieur de pare-chocs avant sous la façade avant, cette installation est réalisée à l'aide de crochets de pré-maintien.

La deuxième étape correspond à la mise en place de l'écran sous moteur sous la façade avant et sous le berceau du véhicule. Cette deuxième installation est réalisée à l'aide d'un autre système de pré-maintien que celui utilisé pour positionner le déflecteur inférieur de pare-chocs avant.

Une fois les deux carénages en question mis en place et pré-maintenus, ils sont ensuite fixés par des vis.

Un inconvénient majeur de ce montage réside en particulier en ce que la grande dimension de l'écran sous moteur nécessite que celui-ci soit pré-maintenu à la fois à l'avant et l'arrière et mis en place verticalement. Outre le fait que cette opération oblige la plupart du temps l'intervention de deux opérateurs, elle implique aussi de prévoir plus de trous dans l'environnement, ce qui a pour conséquence évidemment d'augmenter le temps d'assemblage et donc le coût du montage.

Le document brevet publié FR 3 038 290 A1 divulgue un système de fixation provisoire d'un déflecteur inférieur de pare-chocs avant. Il s'agit notamment de griffes qui sont aptes à s'introduire au sein d'une ouverture pratiquée dans une cloison verticale à l'avant de la façade avant, et qui est placée entre le système de refroidissement et le bouclier. Ce système de fixation permet de suspendre, de manière provisoire, le déflecteur en vue de monter le bouclier avant et ensuite d'y fixer le déflecteur. Cet enseignement n'apporte cependant aucune solution pour la fixation de l'écran sous moteur. Le document JP2009073425 décrit un véhicule comportant un écran sous caisse fixé par un système de clips.

L'invention a pour objectif de pallier au moins un des inconvénients de l'état de la technique susmentionné. Plus particulièrement, l'invention a pour objectif de simplifier et rendre plus aisé la mise en place et le montage des carénages sous la façade avant d'un véhicule automobile, et encore plus particulièrement la mise en place et la fixation d'un écran sous moteur.

A cet effet, l'invention a pour objet un véhicule automobile comprenant un groupe motopropulseur conformément à l'objet tel que revendiqué dans la revendication 1.

Selon un mode avantageux de l'invention, la tolérance donnée du système de fixation provisoire du déflecteur à la façade avant peut être comprise entre 5 et 30mm, préférentiellement entre 10 et 25mm.

Selon un mode avantageux de l'invention, le ou chacun des clips comprend une face d'appui horizontale apte à coopérer avec une face d'appui correspondante sur la façade avant.

Selon un mode avantageux de l'invention, la face d'appui horizontale du ou de chacun des clips est sur une portion flexible dudit clip de manière à ce que ladite face puisse s'effacer par rapport à la face d'appui correspondante sur la façade avant lors de la mise en place dudit clip.

Selon un mode avantageux de l'invention, la portion flexible du ou de chacun des clips comprend une face inclinée adjacente à la face d'appui horizontale, apte à glisser le long d'un bord libre de la face d'appui correspondante sur la façade avant, et à déformer ladite portion lors de la mise en place dudit clip.

Selon un mode avantageux de l'invention, la façade avant comprend une paroi inférieure horizontale avec un ou plusieurs orifices coopérant avec le système de fixation provisoire du déflecteur.

L'invention a également pour objet un déflecteur inférieur de pare-chocs avant de véhicule automobile qui comporte au moins une des caractéristiques précédentes et qui selon un mode avantageux de l'invention, comporte une calle de protection en saillie par rapport au déflecteur du même côté dudit déflecteur que le clip de pré-maintien.

Selon un mode avantageux du déflecteur inférieur de pare-chocs avant selon l'invention, la saillie de la calle de protection par rapport au déflecteur est au moins aussi grande que celle du clip de pré-maintien.

Selon un mode avantageux du déflecteur inférieur de pare-chocs avant selon l'invention, la calle de protection est disposée à moins de dix centimètres du clip de fixation.

L'invention a aussi pour objet un procédé de montage sur la structure d'un véhicule automobile d'un écran inférieur de groupe motopropulseur, comprenant les étapes suivantes : positionnement de l'écran sous la structure ; fixation de l'écran à la structure ; remarquable en ce que le véhicule est conforme à l'invention et en ce que l'étape de positionnement de l'écran comprend une insertion d'un bord avant dudit écran entre un bord arrière du déflecteur et une face inférieure de la façade avant, le déflecteur étant fixé provisoirement à la façade avant de manière à ce que le bord arrière dudit déflecteur baille par rapport à la face inférieure de ladite façade avant.

Les mesures de l'invention sont intéressantes en ce qu'elles facilitent le montage de l'écran sous le groupe motopropulseur. Plus spécifiquement, le système de fixation provisoire du déflecteur inférieur de pare-chocs avant à la façade avant facilite le positionnement de l'écran sous le groupe motopropulseur et sa fixation. Cette invention est d'autant plus intéressante qu'elle permet de positionner l'écran sous la façade avant sans devoir pré-maintenir l'avant dudit écran à l'aide d'un système de pré-maintien, et par conséquent elle permet de limiter également le nombre de trous dans l'environnement. Ceci a pour avantage, outre le fait de permettre d'optimiser le temps nécessaire au montage de l'écran sous moteur, d'améliorer l'ergonomie pour les opérateurs.

Le fait que le clip soit en saillie par rapport au déflecteur permet une fixation provisoire rapide du déflecteur sur la façade avant par simple insertion du clip dans un trou dans ladite façade avant. La forme en « U » du clip permet de donner une flexibilité audit clip tout en ayant un clip formé d'une seule matière. Le positionnement de la face d'appui horizontale et de la face inclinée sur la branche du « U » comportant l'extrémité libre permet le déplacement de ces deux faces par déformation du « U » lors de l'insertion du clip dans un logement dédié sur la face avant, permettant le pré-maintien du déflecteur. De plus, en choisissant de manière appropriée l'espacement entre la surface d'appui horizontale et la surface de déflecteur, le déplacement vertical dudit déflecteur dans une tolérance donnée par rapport à la façade avant est rendu possible de manière simple lorsque ledit déflecteur est pré-maintenu par le clip de pré-maintien sur la face avant. Le bord arrière dudit déflecteur peut alors bailler par rapport à la face inférieure de la façade avant et ainsi permettre l'insertion d'un bord avant d'un écran de groupe motopropulseur en vue du maintien provisoire dudit écran, lorsque le déflecteur est monté sur un véhicule.

D'autres caractéristiques et avantages de la présente invention seront mieux compris à l'aide de la description et des dessins parmi lesquels :
- La figure 1 illustre une vue schématique d'une coupe transversale de la structure avant d'une caisse d'un véhicule automobile selon l'invention;
- La figure 2 montre une vue grossie et schématique du système de fixation provisoire du déflecteur inférieur de pare-chocs avant à la façade avant du véhicule automobile de la figure 1.
- La figure 3 illustre une vue schématique d'une coupe transversale d'un empilement de trois déflecteurs de pare-chocs les uns sur les autres

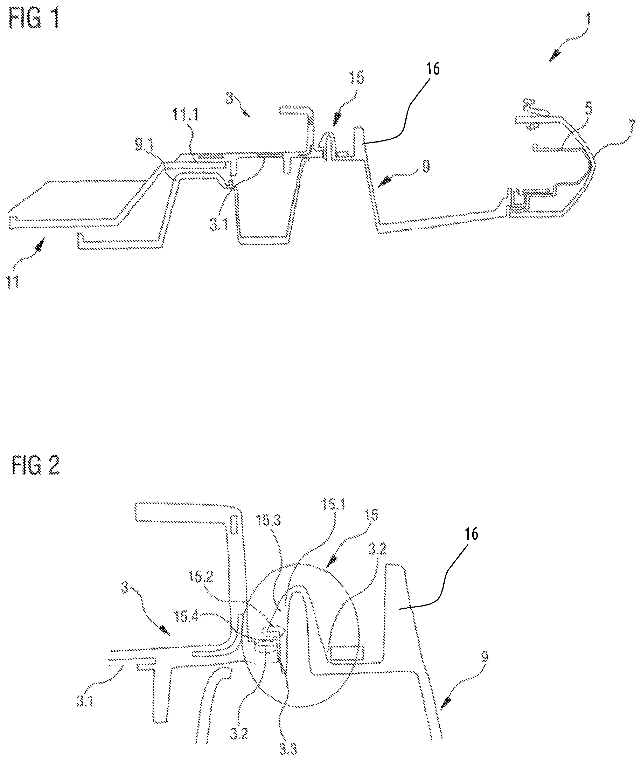

La figure 1 est une coupe transversale de la structure avant de la caisse d'un véhicule automobile 1 selon l'invention. Ce véhicule automobile 1 comprend à l'avant de la caisse un groupe motopropulseur (non représenté), une façade avant 3, une traverse inférieure 5 de pare-chocs avant recouvert d'un bouclier 7 et disposée devant la façade avant 3. Le véhicule comprend également deux carénages, à savoir un déflecteur inférieur de pare-chocs avant 9 et un écran 11 disposé sous le groupe motopropulseur, couramment désigné écran sous moteur. Le déflecteur inférieur de pare-chocs avant 9 comprend une paroi configurée pour s'étendre depuis un bord inférieur du pare-chocs 5/7 jusque sous la façade avant 3. L'écran sous moteur 11 est quant à lui placé sous le groupe motopropulseur (non représenté) localisé à l'arrière de la façade avant 3. Le déflecteur inférieur de pare-chocs avant 9 présente en particulier un système de fixation provisoire 15 à la façade avant 3. Ce système de fixation provisoire 15 est configuré pour permettre, lors du montage du déflecteur inférieur de pare-chocs avant 9, un déplacement vertical du déflecteur 9 dans une tolérance donnée, typiquement correspondant à une plage supérieure à 5mm et/ou inférieure à 30mm, un bord arrière 9.1 du déflecteur 9 pouvant alors bailler par rapport à une face inférieure 3.1 de la façade avant 3. Ce bâillement a pour conséquence de permettre d'insérer le bord avant 11.1 de l'écran sous moteur 11 et ainsi de maintenir celui-ci provisoirement sous la façade avant 3.

La figure 2 est un grossissement du système de fixation provisoire 15 de la figure 1 et de son mode de fonctionnement. En l'occurrence, sur cette figure le système de fixation provisoire 15 est formé par un clip de pré-maintien 15 qui coopère avec un orifice 3.2 de la paroi inférieure horizontale de la façade avant 3. Ce clip 15 comprend une portion flexible 15.1 sur laquelle se trouve une face d'appui horizontale 15.2 et une face inclinée 15.3 adjacente à cette face d'appui horizontale 15.2. Le clip 15 est en sailli par rapport au déflecteur de pare-chocs 9, du côté de la face avant 3 lorsque ledit déflecteur est monté sur le véhicule. La portion flexible 15.1 du clip 15 a une forme en « U », et l'extrémités de l'une des branches du « U » est fixée au déflecteur de pare-chocs 9 et l'extrémité de l'autre branche du « U » est laissée libre. La face d'appui horizontale 15.2 et la face inclinée 15.3 sont situées sur la branche du « U » dont l'extrémité est libre, et s'étendent à l'extérieur de l'espace formé entre les branches du « U » formé par la portion flexible 15.1. C'est à dire que la face d'appui horizontale 15.2 et la face inclinée 15.3 sont situées à l'opposé de l'espace entre les branches du « U ». La forme en « U » permet de donner de la flexibilité au clip 15.

Lors de la mise en place du clip 15, la face d'appui horizontale 15.2 de celui-ci coopère avec une face d'appui correspondante 3.2 sur la façade avant 3. La coopération se fait notamment par effacement de la face d'appui horizontale 15.2 du clip 15 par rapport à la face d'appui correspondante 3.2 sur la façade avant 3. De son côté, lors la mise en place du clip de pré-maintien 15, la face inclinée 15.3 de la portion flexible 15.1 du clip 15, adjacente à la face d'appui horizontale 15.2, est-elle en mesure de glisser le long d'un bord libre 3.3 de la face d'appui 3.2 correspondante sur la façade avant 3, et est apte à déformer la portion flexible 15.1. Cette déformation de la portion flexible 15.1 rapproche la branche du « U » de ladite portion flexible 15.1 comportant l'extrémité libre, de l'autre branche du « U » qui est reliée au déflecteur de pare-chocs 9. Une fois la portion flexible 15.1 du clip de pré-maintien 15 insérée dans l'orifice 3.2 de la paroi inférieure de la façade avant 3, la face d'appui horizontale 15.2 du clip 15, sous le propre poids du déflecteur inférieur de pare-chocs avant 9, vient se bloquer sur la face d'appui horizontale 3.2 correspondante sur la façade avant 3. Une face 15.4 de la portion flexible 15.1 du clip 15, adjacente à la face d'appui horizontale 15.2 et opposée à la face inclinée 15.3 reste positionnée sur un bord libre 3.3 de la face d'appui 3.2 correspondante sur la façade avant 3, limitant le déflecteur inférieur de pare-chocs avant 9 de se déplacer horizontalement. Suite au déplacement vertical du déflecteur inférieur de pare-chocs avant 9 dans une tolérance donnée, un bord inferieur 9.1 de ce carénage 9 peut bailler par rapport à une face inférieure 3.1 de la façade avant 3, créant ainsi un jeu fonctionnel qui permet de glisser un bord avant 11.1 de l'écran sous moteur 11 entre la façade avant 3 et le déflecteur inférieur de pare-chocs avant 9, et de le maintenir en position provisoire.

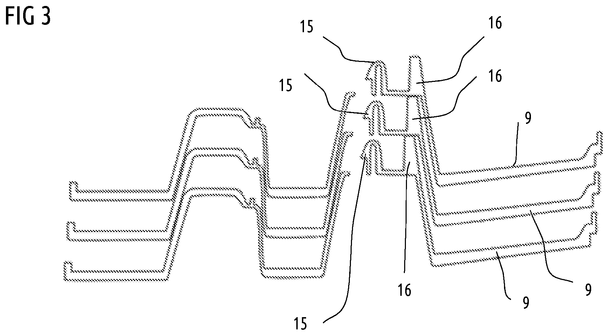

Le déflecteur de pare-chocs 9 comporte une calle de protection 16 en saillie par rapport au déflecteur de pare-chocs 9 du même côté dudit déflecteur 9 que le clip de pré-maintien 15. La saillie de ladite calle de protection 16 par rapport au déflecteur de pare-chocs 9 est au moins aussi grande que celle du clip de pré-maintien 15. C'est-à-dire que la hauteur de la calle de protection par rapport au déflecteur de pare-chocs 9 et la hauteur du clip de pré-maintien 15 par rapport au même déflecteur 9 est au moins identique. En variante, la hauteur de la calle peut être choisie plus haute que le clip de pré-maintien 15. Comme le montre la figure 3, cette calle 16 permet, lorsque plusieurs déflecteurs de pare-chocs sont empilés les uns sur les autres, par exemple pour transporter un grand nombre de déflecteurs 9 dans un minimum d'espace, de conserver une distance minimale entre deux déflecteurs 9 pour éviter que le clip de pré-maintien 15 de l'un des déflecteurs 9 ne soit cassé sous le poids des déflecteurs 9 qui sont empilés au-dessus. Dans le mode de réalisation présenté dans les figures, la calle de protection 16 est disposé à proximité du clip de pré-maintien 15, par exemple à moins de dix centimètres du clip 15.

Avantageusement, le système de fixation provisoire 15 du déflecteur inférieur de pare-chocs avant 9 selon l'invention, est venu de matière avec le reste du corps du déflecteur 9. Ce dernier étant généralement formé d'alvéoles, le système de fixation provisoire 15 est avantageusement positionné sur une ou plusieurs de ces alvéoles. De même, la calle de protection 16 est aussi avantageusement positionnée sur l'alvéole, à proximité du système de fixation provisoire 15.

Grâce au déflecteur inférieur de pare-chocs avant 9 du véhicule 1 selon l'invention, le montage d'un écran sous moteur 11 sous la façade avant 3 est facilité et réalisé rapidement en deux étapes. La première étape consiste au positionnement de l'écran sous moteur 11 sous la façade avant 3 (figure 1 et figure 2). Lors du montage du déflecteur inférieur de pare-chocs avant 9 selon l'invention, le jeu fonctionnel ou l'espacement d'un bord arrière 9.1 de ce déflecteur 9 par rapport à une face inférieure 3.1 de la façade avant 3 permet d'insérer en position horizontale l'avant 11.1 de l'écran sous moteur 11 et de maintenir celui-ci positionné entre la façade avant 3 et le déflecteur inférieur de pare-chocs avant 9 sans devoir ajouter des clips de pré-maintien en avant de l'écran 11. Une fois l'avant 11.1 de l'écran sous moteur 11 positionné sous la façade avant 3, la deuxième étape du montage consiste à fixer définitivement l'écran sous moteur 11. Pour cela il suffit au préalable de pré-maintenir l'arrière de l'écran 11 à l'aide de clips de pré-maintien classiques.

De manière générale, cette invention a l'avantage de faciliter la mise en place par les opérateurs d'un écran sous moteur sous la façade avant d'un véhicule. Cette mise en place est réalisée avantageusement en position horizontale sans utilisation de clips de pré-maintien pour pré-maintenir l'avant du carénage, et sans percer de trous supplémentaires dans l'environnement. Cette invention permet donc un gain de temps dans le montage d'un écran sous moteur mais également un gain sur l'outillage de ce carénage, et en ce sens une simplification des pièces supports. Cette invention est d'autant plus encore intéressante qu'elle est adaptable à tout type de véhicule.

Il est bien entendu que ce qui vient d'être décrit pour le pré-maintien d'un bord avant d'un écran sous moteur sous la façade avant s'applique également pour le positionnement d'un autre bord avant de ce même écran, le déflecteur inférieur de pare-chocs avant pouvant comprendre un ou plusieurs systèmes de fixation provisoire selon l'invention.

## Revendications

1. Véhicule automobile (1) comprenant un groupe motopropulseur, comprenant :
- une façade avant (3);
- un pare-chocs avant (5, 7) disposé devant la façade avant (3);
- un déflecteur (9) inférieur de pare-chocs avant s'étendant depuis un bord inférieur du pare-chocs (5, 7) jusque sous la façade avant (3);
- un écran (11) disposé sous le groupe motopropulseur situé à l'arrière de la façade avant (3);
- un système de fixation provisoire (15) à la façade avant (3) comprenant un ou plusieurs clips (15) coopérant avec la façade avant (3), comportant une portion flexible (15.1) en forme de « U », l'extrémité d'une des branches du « U » étant fixée au déflecteur (9) et l'extrémité de l'autre branche du « U » étant libre, ledit système (15) étant configuré pour permettre un déplacement vertical du déflecteur (9) dans une tolérance donnée ;
**caractérisé en ce que** le système de fixation provisoire (15) est configuré pour, lors du montage du déflecteur (9), permettre à un bord arrière (9.1) dudit déflecteur (9) de bâiller par rapport à une face inférieure (3.1) de la façade avant (3), l'écran (11) comprenant un bord avant (11.1) inséré entre le déflecteur (9) et la façade avant (3), dans l'espacement formé par le bâillement vertical du déflecteur (9) et ainsi permettre l'insertion du bord avant (11.1) de l'écran (11) en vue d'un maintien provisoire dudit écran (11).

2. Véhicule automobile (1) selon la revendication 1, **caractérisé en ce que** le ou chacun des clips (15) comprend une face d'appui horizontale (15.2) apte à coopérer avec une face d'appui correspondante (3.2) sur la façade avant (3).

3. Véhicule automobile (1) selon la revendication 2, **caractérisé en ce que** la face d'appui horizontale (15.2) du ou de chacun des clips (15) est sur une portion flexible (15.1) dudit clip (15) de manière à ce que ladite face (15.2) puisse s'effacer par rapport à la face d'appui correspondante (3.2) sur la façade avant (3) lors de la mise en place dudit clip (15).

4. Véhicule automobile (1) selon la revendication 3, **caractérisé en ce que** la portion flexible (15.1) du ou de chacun des clips (15) comprend une face inclinée (15.3) adjacente à la face d'appui horizontale (15.2), apte à glisser le long d'un bord libre (3.3) de la face d'appui correspondante (3.2) sur la façade avant (3), et à déformer ladite portion (15.1) lors de la mise en place dudit clip (15).

5. Véhicule automobile (1) selon l'une des revendications 1 à 4, **caractérisé en ce que** la façade avant (3) comprend une paroi inférieure horizontale avec un ou plusieurs orifices (3.2) coopérant avec le système de fixation provisoire (15) du déflecteur (9).

6. Procédé de montage sur la structure d'un véhicule automobile (1) d'un écran inférieur de groupe motopropulseur (11), comprenant les étapes suivantes :
- positionnement de l'écran (11) sous la structure ;
- fixation de l'écran (11) à la structure ;
**caractérisé en ce que** le véhicule (1) est conforme à l'une des revendications 1 à 5 et **en ce que** l'étape de positionnement de l'écran (11) comprend une insertion d'un bord avant (11.1) dudit écran (11) entre un bord arrière (9.1) du déflecteur (9) et une face inférieure (3.1) de la façade avant (3), le déflecteur (9) étant fixé provisoirement à la façade avant (3) de manière à ce que le bord arrière (9.1) dudit déflecteur (9) bâille par rapport à la face inférieure (3.1) de ladite façade avant (3).

## Patentansprüche

1. Kraftfahrzeug (1) mit einem Antriebsstrang mit:
- eine Vorderfront (3);
- einen vorderen Stoßfänger (5, 7), der vor der vorderen Fassade (3) angeordnet ist;
- ein unterer vorderer Stoßfängerabweiser (9), der sich von einem unteren Rand des Stoßfängers (5, 7) bis unter die vordere Fassade (3) erstreckt;
- eine Abschirmung (11), die unter dem hinter der vorderen Fassade (3) befindlichen Antriebsstrang angeordnet ist;
- ein provisorisches Befestigungssystem (15) an der vorderen Fassade (3), das eine oder mehrere Klammern (15) umfasst, die mit der vorderen Fassade (3) zusammenwirken, mit einem flexiblen Abschnitt (15.1) in Form eines "U", wobei das Ende eines der Schenkel des "U" an der Ablenkplatte (9) befestigt ist und das Ende des anderen Schenkels des "U" frei ist, wobei das System (15) so konfiguriert ist, dass es eine vertikale Bewegung der Ablenkplatte (9) innerhalb einer gegebenen Toleranz ermöglicht;
Das System zur provisorischen Befestigung (15) ist so ausgebildet, dass es bei der Montage des Deflektors (9) ermöglicht, dass eine hintere Kante (9.1) des Deflektors (9) in Bezug auf eine Unterseite (3.1) der vorderen Fassade (3) gähnt, wobei der Schirm (11) eine vordere Kante (11.1) aufweist, die zwischen dem Deflektor (9) und der vorderen Fassade (3) in dem durch das vertikale Gähnen des Deflektors (9) gebildeten Abstand eingefügt ist, und somit das Einsetzen der vorderen Kante (11.1) des Schirms (1) ermöglicht zur vorübergehenden Aufrechterhaltung des Bildschirms (11).

2. Kraftfahrzeug (1) nach Anspruch 1, **dadurch gekennzeichnet, dass** der oder jeder der Clips (15) eine horizontale Auflagefläche (15.2) aufweist, die mit einer entsprechenden Auflagefläche (3.2) an der vorderen Fassade (3) zusammenwirken kann.

3. Kraftfahrzeug (1) nach Anspruch 2, **dadurch gekennzeichnet, dass** die horizontale Auflagefläche (15.2) des oder jedes Clips (15) auf einem flexiblen Abschnitt (15.1) des Clips (15) derart angeordnet ist, dass die Fläche (15.2) sich in Bezug auf die entsprechende Auflagefläche (3.2) an der vorderen Fassade (3) beim Anbringen des Clips (15) zurückziehen kann.

4. Kraftfahrzeug (1) nach Anspruch 3, **dadurch gekennzeichnet, dass** der flexible Abschnitt (15.1) der oder jeder der Klammern (15) eine geneigte Fläche (15.3) aufweist, die an die horizontale Auflagefläche (15.2) angrenzt und geeignet ist, entlang einer freien Kante (3.3) der entsprechenden Auflagefläche (3.2) an der vorderen Fassade (3) zu gleiten und den Abschnitt (15.1) beim Anbringen der Klammer (15) zu verformen.

5. Kraftfahrzeug (1) nach einem der Ansprüche 1 bis 4, **dadurch gekennzeichnet, dass** die vordere Fassade (3) eine horizontale Bodenwand mit einer oder mehreren Öffnungen (3.2) umfasst, die mit dem provisorischen Befestigungssystem (15) des Deflektors (9) zusammenwirken.

6. Verfahren zur Montage einer unteren Abschirmung (11) eines Antriebsstrangs an der Struktur eines Kraftfahrzeugs (1), mit folgenden Schritten:
- Positionierung des Bildschirms (11) unter der Struktur;
- Befestigung des Schirms (11) an der Struktur;
Das Fahrzeug (1) entspricht einem der Ansprüche 1 bis 5 und **dadurch gekennzeichnet, dass** der Schritt des Positionierens des Schirms (11) ein Einsetzen einer Vorderkante (11.1) des Schirms (11) zwischen einer Hinterkante (9.1) des Ablenkers (9) und einer Unterseite (3.1) der Vorderfront (3) umfasst, wobei der Ablenker (9) vorübergehend an der Vorderfront (3) derart befestigt ist, dass die Hinterkante (9.1) des Ablenkers (9) gegenüber der Unterseite (3.1) des Schirms abfällt Vorderseite (3).

## Claims

1. Motor vehicle (1) comprising a powertrain, comprising:
front panel (3);
front bumper (5, 7) arranged in front of the front facade (3);
- a lower front bumper deflector (9) extending from a lower edge of the bumper (5, 7) to below the front facade (3);
- a screen (11) arranged under the power train located in the rear of the front panel (3);
- a temporary fixing system (15) to the front panel (3) comprising one or more clips (15) cooperating with the front panel (3), comprising a flexible portion (15.1) in the shape of a "U", the end of one of the branches of the "U" being fixed to the deflector (9) and the end of the other branch of the "U" being free, the said system (15) being configured to allow vertical displacement of the deflector (9) within a given tolerance;
wherein the temporary fixing system (15) is configured to, upon assembly line of the deflector (9),
allow a rear edge (9.1) of said deflector (9) to yawn by report to a lower face (3.1) of the front facade (3), the screen (11) comprising a front edge (11.1) inserted between the deflector (9) and the front facade (3), in the spacing formed by the vertical yawn of the deflector (9) and thus allow insertion of the front edge (11.1) of the screen (11) with a view to temporarily maintaining said screen (11).

2. Motor vehicle (1) according to claim 1, **characterised in that** the or each of the clips (15) comprises a horizontal bearing face (15.2) capable of cooperating with a corresponding bearing face (3.2) on the front facade (3).

3. Motor vehicle (1) according to Claim 2, **characterised in that** the horizontal bearing face (15.2) of the or each of the clips (15) is on a flexible portion (15.1) of the said clip (15) so that the said face (15.2) can be retracted by report to the corresponding bearing face (3.2) on the front facade (3) when the said clip (15) is put into place.

4. Motor vehicle (1) according to claim 3, **characterised in that** the flexible portion (15.1) of the or each of the clips (15) comprises an inclined face (15.3) adjacent to the horizontal bearing face (15.2), able to slide along a free edge (3.3) of the corresponding bearing face (3.2) on the front facade (3), and to deform said portion (15.1) when said clip (15) is put into place.

5. Motor vehicle (1) according to one of Claims 1 to 4, **characterised in that** the front facade (3) comprises a horizontal lower wall with one or more orifices (3.2) cooperating with the temporary fixing system (15) of the deflector (9).

6. Method of assembly line on the structure of a motor vehicle (1) of a lower screen of a power train (11), comprising the steps of:
- positioning of the screen (11) under the structure;
- fixing the screen (11) to the structure;
wherein the vehicle (1) is in accordance with one of claims 1 to 5 and in that the step of positioning the screen (11) comprises an insertion of a front edge (11.1) of said screen (11) between a rear edge (9.1) of the deflector (9) and a lower face (3.1) of the front facade (3), the deflector (9) being temporarily fixed to the front facade (3) so that the rear edge (9.1) of said deflector (9) yawns by report at the lower face (3.1) of front panel (3).
